(19) Europäisches Patentamt
European Patent Office
Office européen des brevets

(11) Veröffentlichungsnummer: **0 428 542 B1**

# (12) EUROPÄISCHE PATENTSCHRIFT

(45) Veröffentlichungstag der Patentschrift: **07.09.94**

(51) Int. Cl.[5]: **C08F 283/12**, C09K 19/40, G02F 1/13

(21) Anmeldenummer: **89908158.2**

(22) Anmeldetag: **29.06.89**

(86) Internationale Anmeldenummer: **PCT/EP89/00748**

(87) Internationale Veröffentlichungsnummer: **WO 90/01505 (22.02.90 90/05)**

Die Akte enthält technische Angaben, die nach dem Eingang der Anmeldung eingereicht wurden und die nicht in dieser Patentschrift enthalten sind.

## (54) FERROELEKTRISCHE FLÜSSIGKRISTALLINE Si-ENTHALTENDE POLYMERE, EIN VERFAHREN ZU IHRER HERSTELLUNG UND IHRE VERWENDUNG IN ELEKTROOPTISCHEN BAUTEILEN.

(30) Priorität: **13.08.88 DE 3827601**

(43) Veröffentlichungstag der Anmeldung: **29.05.91 Patentblatt 91/22**

(45) Bekanntmachung des Hinweises auf die Patenterteilung: **07.09.94 Patentblatt 94/36**

(84) Benannte Vertragsstaaten: **AT BE CH DE FR GB IT LI NL SE**

(56) Entgegenhaltungen:
**EP-A- 0 029 162**
**EP-A- 0 066 137**
**EP-A- 0 238 789**
**EP-A- 0 260 786**
**EP-A- 0 291 884**

**Introduction to Ferroelectric Liquid Crystals, N.A. Clark and S.T. Lagerwall, Gordon and Breach Science Publishers S.A., ISBN 2-88124-282-0, Seite 1.**

(73) Patentinhaber: **HOECHST AKTIENGESELLSCHAFT**

**D-65926 Frankfurt (DE)**

(72) Erfinder: **SCHEROWSKY, Günter**
**Winklerstrasse 18B**
**D-1000 Berlin 33 (DE)**
Erfinder: **SCHLIWA, Andreas**
**Spenerstrasse 14 a**
**D-1000 Berlin 21 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Flüssigkristalle haben in jüngerer Zeit Eingang in verschiedene technische Gebiete gefunden, in denen bestimmte elektro-optische Eigenschaften (z. B. kleine Ansteuerspannungen) in Verbindung mit bestimmten Anforderungen an Anzeige- oder Schaltvorrichtungen (z.B. flache Bauweise, geringes Gewicht) gefragt sind. Diese Vorrichtungen beruhen z.Z. auf dielektrischen Ausrichtungseffekten in nematischen, cholesterischen und/oder smektischen Flüssigkristallphasen, wobei die Lichtdurchlässigkeit oder -reflektivität der Vorrichtung von der angelegten elektrischen Spannung abhängt.

Ein Flüssigkristalldisplay besteht aus zwei Trägerplatten, vorzugsweise Glasplatten, die mit transparenten Elektroden und in der Regel mit einer oder zwei Orientierungsschichten beschichtet sind, zwischen denen sich die Flüssigkristallschicht befindet. Als weitere Komponenten sind Polarisatoren, Farbfilter, Passivierungs-, Antireflex-, Diffisionssperr- u.ä. Schichten gebräuchlich.

Während derzeit noch überwiegend nematische oder chloesterische Flüssigkristallphasen verwendet werden, haben seit einigen Jahren in zunehmendem Maße auch ferroelektrische, insbesondere smektische C*, Flüssigkristallphasen an Bedeutung gewonnen. Ferroelektrische Flüssigkristalle besitzen den Vorteil sehr kurzer Schaltzeiten und ermöglichen den Betrieb von hochauflösenden Bildschirmen ohne Zuhilfenahme elektronischer Elemente, wie z.B. Dünnschichttransistoren, die bei der Verwendung nematischer oder chloresterischer Flüssigkristallphasen erforderlich sind.

Bei allen genannten Anwendungen handelte es sich um niedermolekulare flüssigkristalline Verbindungen, d.h. mit Molmassen unterhalb von 2000 g/mol, vorzugsweise unterhalb von 800 g/mol, insbesondere aber nicht um Polymere, Copolymere, Polykondensate oder Copolykondensate. Wegen ihrer geringeren Viskosität besitzen niedermolekulare Flüssigkristalle im allgemeinen den Vorteil kurzer Schaltzeiten; dies gilt insbesondere für ferroelektrische Flüssigkristalle, deren Schaltzeiten im Bereich von µs liegen und die damit 10 bis 1000 mal schneller schalten als konventionelle nematische Flüssigkristallphasen.

Bei der Anwendung ferroelektrischer Flüssigkristalle kann jedoch das Problem der hohen Anfälligkeit der Orientierung hinsichtlich mechanischer Beanspruchung (Stoß, Schlag, Druck, thermische Verformung, Verbiegung usw.) auftreten, was zu einer irreversiblen Störung der Bildqualität eines Displays führen kann. Diese hohe Empfindlichkeit erschwert derzeit den Bau flexibler ferroelektrischer LC-Displays und verteuert die Herstellung konventioneller, d.h. mit Glas oder starren Kunststoffplatten versehenen, Displays.

Wegen ihrer geringeren Deformierbarkeit und besseren Verarbeitbarkeit ist die Verwendung polymerer Flüssigkristalle vorteilhaft; mit ihnen lassen sich flexible ferroelektrische Displays herstellen. Besonders vorteilhaft ist die Produktion einer Displayfolie in einem kontinuierlichen Prozeß, wozu schnell schaltende polymere ferroelektrische Flüssigkristalle benötigt werden. Daher bezieht sich die vorliegende Erfindung auf die Bereitstellung neuer polymerer, ferroelektrischer Flüssigkristalle.

Die neuen Verbindung stellen Polymere der folgenden Formel (I) dar:

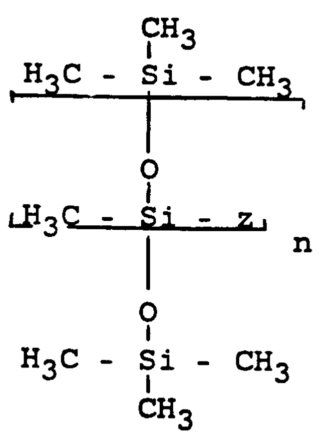

(I)

wobei

z = $CH_3$ oder eine Gruppe der Formel (II) ist,

$$(CH_2)_a(-B)_b-M^1(-A^1)_c(-M^2)_d(-A^2)_e(-M^3)_f(-A^3)_g-R^1 \qquad (II)$$

mit der Maßgabe, daß mindestens zwei Substituenten z im Polymeren eine Gruppe der Formel (II) sind,

n = 5 bis 500,

B = eine Gruppe der Formel

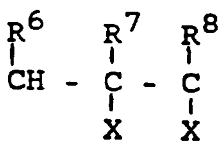 , 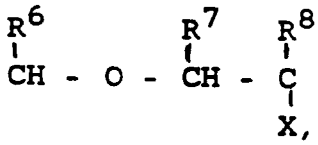 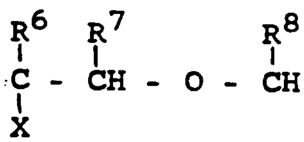 , 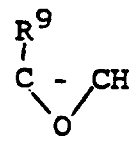

mit $R^6$, $R^7$, $R^8$ gleich oder verschieden H, $CH_3$, $OCH_3$, F, Cl, Br, wobei mindestens eine Gruppe $R^6$, $R^7$, $R^8$ gleich H sein muß und X = H, F, Cl, Br und $R^9$ = H, $C_1$-$C_{10}$-Alkyl,

$R^1$ = geradkettiges oder verzweigtes (ohne asymmetrisches C-Atom) Alkyl mit 1 bis 16 oder Alkenyl mit 2 bis 16 C-Atomen, wobei auch eine oder zwei nicht-benachbarte $-CH_2$-Gruppen durch -O-, -S-, - CO-, -CO-O-, -O-CO- oder -O-CO-O- ersetzt sein können und wobei auch H durch F ersetzt sein kann, oder einer der nachfolgenden Reste

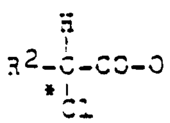 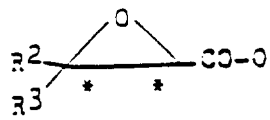 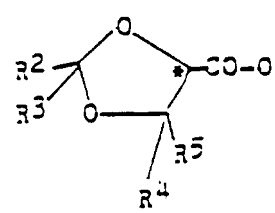

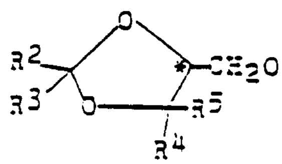 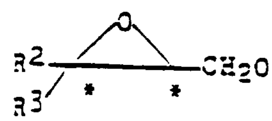 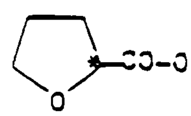

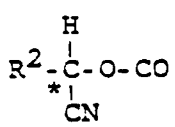 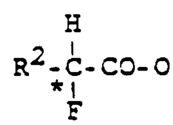 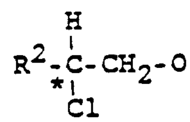

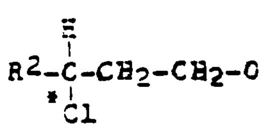 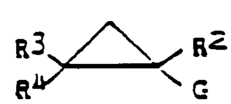

$R^2$, $R^3$, $R^4$, $R^5$ = H oder geradkettiges oder verzweigtes Alkyl mit 1 bis 16 oder Alkenyl mit 2 bis 16 C-Atomen, bei dem auch eine $-CH_2$-Gruppe durch -O-, -CO-O-oder -O-CO- ersetzt sein kann, oder $R^2$ und $R^3$ zusammen cyclisches Alkyl mit 3 bis 8 C-Atomen

a = 2 bis 20, vorzugsweise 6 bis 12

b, c, d, e, f, g = 0 oder 1 mit der Maßgabe, daß e+f+g = 2 oder 3 ist

$A^1$, $A^2$, $A^3$ = gleich oder verschieden 1,4-Phenylen, bei dem 1 oder 2 H durch F, Cl und/oder CN ersetzt sein können, trans-1,4-Cyclohexylen, bei dem 1 oder 2 H durch F, Cl, CN und/oder $CH_3$ ersetzt sein können, Pyrazin-2,5-diyl, Pyridazin-3,6diyl, Pyridin-2,5-diyl, Pyrimidin-2,5-diyl, (1,3,4)-Thiadiazol-2,5-diyl, 1,3-Dioxan-2,5diyl, 1,3-Dithian-2,5-diyl.

$M^2$, $M^3$ = gleich oder verschieden CO-O, O-CO, CO-S, S-CO, $CH_2$-O, O-$CH_2$,

$M^1$ = O,

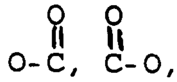

$CH_2$-$CH_2$

G = geradkettiges oder verzweigtes Alkylen mti 1 bis 16 C-Atomen oder Alkenylen mit 2 bis 16 C-Atomen, bei dem auch eine oder zwei nichtbenachbarte -$CH_2$- Gruppen durch -O-, -S-, -O-CO-, -CO-O-, S-CO- oder -CO-S-ersetzt sein können, bedeuten.

Bevorzugt werden ferroelektrische flüssigkristalline Polymere der Formel (I), bei denen die Gruppierung $(-A^1)_c(M^2)_d(-A^2)_e(-M^3)_f(-A^3)_g$- bedeutet:

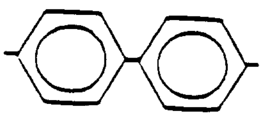 , 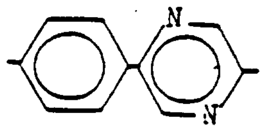 , 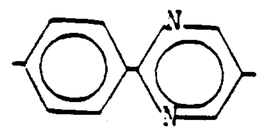 ,

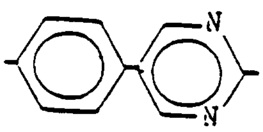 , 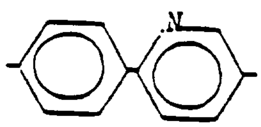 , 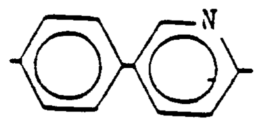 ,

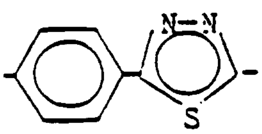 , 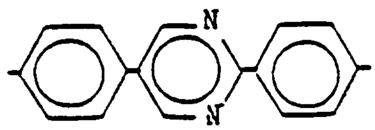 ,

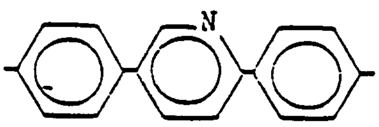 , 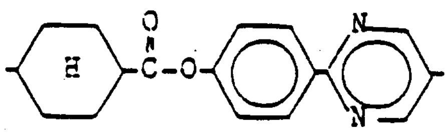 ;

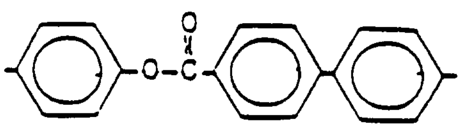 , 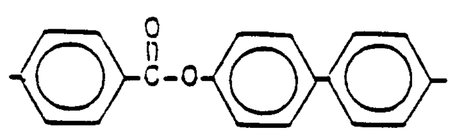 ,

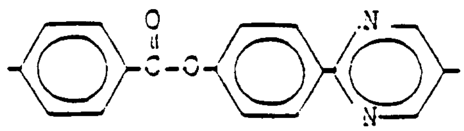 , 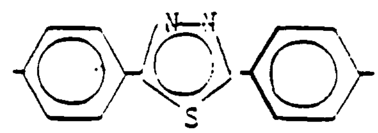 ,

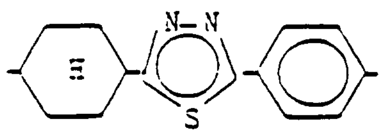 , 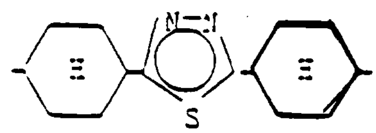 ,

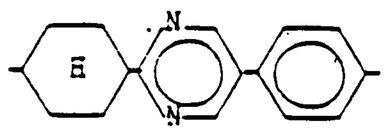 , 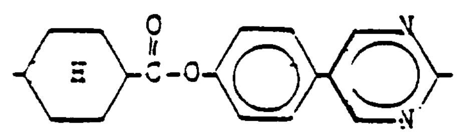

Besonders bevorzugt werden ferroelektrische, flüssigkristalline Polymere der Formel (I) wobei

B = die oben genannte Bedeutung hat und

Y = H, $CH_3$,

$R^1$ = geradkettiges oder verzweigtes (ohne asymmetrisches C-Atom) Alkyl oder Alkenyl mit 2 bis 16 C-Atomen, wobei auch eine oder zwei nicht-benachbarte $-CH_2$-Gruppen durch -O-, -S-, -CO-, -CO-O-, -O-CO- oder -O-CO-O- ersetzt sein können und wobei auch H durch F ersetzt sein kann, oder den Rest

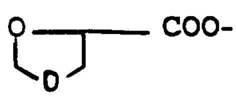 ,

a = 6 bis 12, bedeuten und die Gruppierung $(-A^1)_c(-M^2)_d-(-A^2)_e(-M^3)_f(-A^3)_g-$ folgende Strukturen umfaßt:

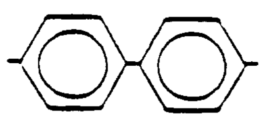 , 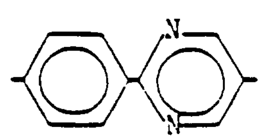 , 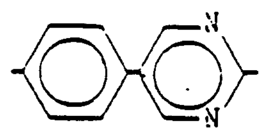

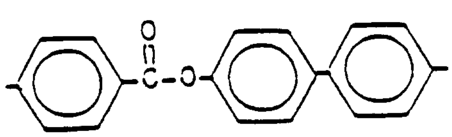 , 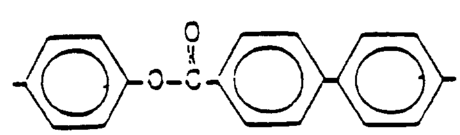

Ebenfalls besonders bevorzugt werden solche ferroelektrische flüssigkristalline Polymere der Formel (I), bei denen jedes z eine Gruppe der Formel (II) ist.

Die genannten Si-enthaltenden Polymere werden durch Addition von Verbindungen der allgemeinen Formel (III)

$CH_2 = CH(-CH_2)_{a-2}(-B)_b-M^1(-A^1)_c(-M^2)_d(-A^2)_e(-M^3)_f(-A^3)_g-R^1$ (III)

an ein Polyhydrogenmethylsiloxan der Formel (IV)

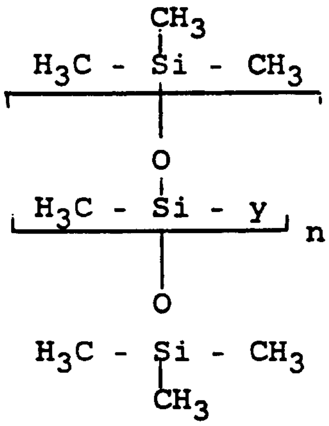

(IV)

gewonnwen,
wobei

n = 5 bis 500 und
y = H oder $CH_3$ mit der Maßgabe, daß mindestens zwei Gruppen y gleich H sind.

Die erfindungsgemäßen Si-enthaltenden Polymere eignen sich in besonderem Maße zur Verwendung in elektrooptischen Bauteilen.

**Beispiel 1**

**A) Allgemeine Vorschriften**

(I) Allgemeine Vorschrift zur Veresterung mittels Dicyclohexylcarbodiimid

Zu 1 mmol des entsprechenden Alkohols in 10 ml abs. $CH_2Cl_2$ werden unter Rühren und Feuchtigkeitsausschluß 15 Mol-% 4-Dimethylaminopyridin (DMAP) und 1 mmol der Carbonsäure gegeben. Man kühlt auf 0 °C und setzt 1 mmol Dicyclohexylcarbdiimid (DCC) zu. Anschließend rührt man 30 min bei 0 °C und 18 h bei Raumtemperatur.
Die ausgefallene Substanz wird abfiltriert, die $CH_2Cl_2$-Phase mit Wasser gewaschen, über $MgSO_4$ getrocknet und das Lösungsmittel abgezogen.

(II) Allgemeine Vorschrift zur Spaltung von Tetrahydropyranylethern (THP-Ether)

Eine Lösung von 5 mmol THP-ether und 0.5 mmol PPTS (Pyridinium-p-Toluolsulfonat) in 40 ml Ethanol wird bei 55 °C (Ölbadtemperatur) 3 h gerührt. Das Lösungsmittel wird abgezogen und der Rückstand mit $H_2O$ gewaschen.

(III) Allgemeine Vorschrift zur Addition terminaler Alkene an Polyhydrogenmethylsiloxan (PHMS)

In einem 100 ml Dreihalskolben werden 1,1 mol des betreffenden Alkens eingewogen. Anschließend werden 40 ml über $LiAlH_4$ erhitztes Toluol eindestilliert. Nach dem Abkühlen gibt man 1 mmol SiH des frisch umgefällten PHMS dazu. Das Reaktionsgemisch wird mit $N_2$ gespült und unter Feuchtigkeitsausschluß zum Sieden erhitzt. Es werden $10^{-4}$ mmol des $H_2PtCl_2 \cdot 6H_2O$ in absolutem Isopropanol zugespritzt und bei 100 °C noch 40 h gerührt. Nach dem Abkühlen des Reaktionsgemisches fällt man das Produkt aus, indem man 70 ml MeOH unter starkem Rühren zutropft. Das Polymer wird abfiltriert, in 30 ml Toluol aufgenommen, 8 mal umgefällt und im Vakuum getrocknet.

**B) Herstellung des Monomeren der Formel**

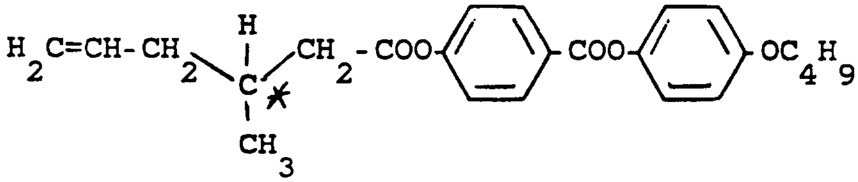

**4-Butoxyphenyl-4-tetrahydropyran-2-yl-oxy-benzoat (3)**

Nach der allgemeinen Vorschrift (I) werden 7 g (32 mmol) (2) mit 5.23 g (38 mmol) 4-Butoxyphenol 0.7 g DMAP und 6.5 g (38 mmol) DCC versetzt. Das Rohprodukt wird säulenchromatographisch (Laufmittel $CH_2Cl_2$) gereinigt. Man isoliert ein farbloses Öl. Ausbeute: 8.36 g (72 %)

**4-Butoxyphenyl-4-hydroxybenzoat (4)**

Gemäß der allgemeinen Vorschrift (II) werden 8.36 g (23 mmol) (3) in 180 ml Ethanol gelöst, mit 573 mg (2.3 mmol) PPTS versetzt und 6 h bei 55 °C (Ölbadtemperatur) gerührt. Ethanol wird abdestilliert, der Rückstand mit Ether versetzt, mit $H_2O$ gewaschen, über $MgSO_4$ getrocknet und das Lösungsmittel abgezogen.
Ausbeute: 6.08 g (93 %)
Schmp.: 153 °C

**(R)-(+)-6-Hydroxy-3-methylhexansäuremethylester (10)**

9.42 g (51 mmol) (R)-(+)-Methylcitronellat (9) wird in 26 ml Methanol gelöst und mit 2.45 g (51 mmol) $O_3$ 1 h bei -30 °C gesättigt. Anschließend werden 3.12 g (82 mmol) $NaBH^4$ in kleinen Portionen unter Rühren addiert. Während der stark exothermen Reaktion, die 2 h dauert, hält man die Temperatur zwischen -20 °C und +10 °C. Anschließend entfernt man die Kühlung und läßt auf Raumtemperatur erwärmen. Ein großer Teil des Methanols wird abdestilliert und der Rückstand mit 80 ml $CHCl_3$ versetzt. Diese Mischung wird bei 0 °C zu einer schnell gerührten Lösung von 50 ml konz. HCl in 100 g Eis gegeben. Die Chloroformphase wird einmal mit $Na_2CO_3$-Lösung und dreimal mit $H_2O$ gewaschen, über $MgSO_4$ getrocknet und eingeengt. Das Rohprodukt wird am Kugelrohr destilliert.
Ausbeute: 5.12 g (68 %)
$[\alpha]_D^{20}$ = + 9.3 ° (c = 1 in Chloroform)
Sdp.: 85 °C

**Dehydratisierung**

Das wie weiter unten beschrieben hergestellte Tosylat (1 mmol) wird in 10 ml HMPT vorgelegt und $(Bu_4N)_2\ (CO_2^-)_2$ zugegeben und 2 h auf 160 °C erhitzt. Nach dem Abkühlen und Versetzen mit Wasser mit Ether extrahieren und destillieren.

**(3R)-3-Methylhexensäure (5)**

Nach der allgemeinen Vorschrift (I) werden 2.5 g (10 mmol) (11) mit 1.15 g (20 mmol) KOH in 20 ml Ethanol 3 h bei 80 °C gerührt.
Die klare Reaktionsmischung wird im Vakuum vom Ethanol befreit, mit Eiswasser versetzt sowie mit Ether überschichtet. Zu dieser Mischung tropft man bei 0 °C unter starkem Rühren 20 ml 1n HCl. Die organische Phase wird abgetrennt, mit $H_2O$ gewaschen, über $MgSO_4$ getrocknet und eingeengt. Der zähflüssige Rückstand wird ohne weitere Reinigung umgesetzt.

**(3R)-3-Methylhexenoyloxy-4-butoxyphenyl-benzoat (6)**

Nach der allgemeinen Vorschrift (I) werden 2.6 g (9.1 mmol) (4) mit 2.09 g (9.1 mmol) (5), 167 mg DMAP und 1.87 g (9.1 mmol) DCC umgesetzt.

Die Reinigung erfolgt säulenchromatographisch (Laufmittel E/PE) 1:1). Man isoliert eine farblose ölige Flüssigkeit. Ausbeute: 3.01 g (67 %)
Addition an das Siloxan siehe allgemeine Vorschrift.

**Beispiel 2**

Nach der Methode von Meyers et al in J.A.C.S. 98, S.567 (1976) wurde aus (1S,2S) (+)-1-phenyl-2-amino-1,3-propandiol und dem Orthoester der Formel

$CH_3CH_2C(OC_2H_5)_3$

die Oxazolin-Verbindung der Formel

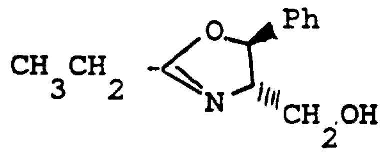

hergestellt und anschließend mit Natriumhydrid/Methyljodid in die entsprechende Methoxyverbindung der Formel

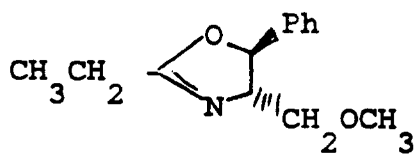

umgewandelt. Diese Verbindung wurde mit LDA metalliert und anschließend wurde bei -98 °C die Verbindung der Formel

$H_2C=CH(-CH_2)_2-J$

addiert. Man erhielt in einer Ausbeute von 25 % die Verbindung der Formel

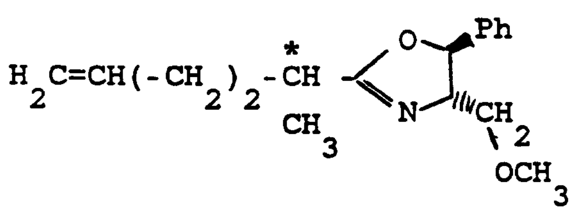

2,13 g dieser Verbindung wurden mit 4 H $H_2SO_4$ 3,5 h unter Rückfluß erhitzt. Nach Aufarbeitung erhielt man 1,16 g der Verbindung der Formel

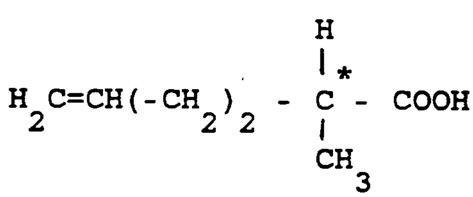

Diese Säure wurde mit einer Verbindung der Formel

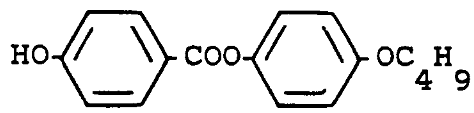

in $CH_2Cl_2$ und in Gegenwart von Dicyclohexylcarbodiimid verestert.

In einer Ausbeute von 83 % erhielt man die Verbindung der Formel

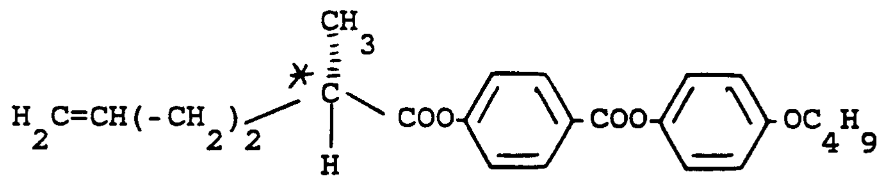

Die Addition an das Siloxan siehe allgemeine Vorschrift.

**Beispiel 3**

Synthesebeispiele für m = 8,

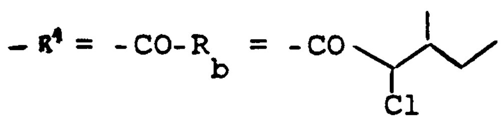

**4-Toluolsulfonsäure-9-decenylester (A)**

Zu einer Lösung von 10 g (70 mmol) 9-Decenol und 14,7 g (77 mmol) 4-Toluolsulfonsäurechlorid in 80 ml absolutem $CHCl_3$ werden unter Feuchtigkeitsausschluß 10 ml (140 mmol) Pyridin getropft. Es wird noch 30 min bei 0 °C und anschließend für 20 h bei Raumtemperatur gerührt. Das Reaktionsgemisch wird mit kalter, verdünnter wäßriger HCl-Lösung angesäuert; die $CHCl_3$-Phase wird abgetrennt, mit $H_2O$ neutral gewaschen, über $MgSO_4$ getrocknet und das Lösemittel abgezogen; Ausbeute 16,9 g (78 %).

**4-(9-Decenyloxy)-benzoesäuremethylester (B)**

Eine Lösung von 15,8 g (50 mmol) von A, 7,6 g (50 mmol) 4-Hydroxybenzoesäuremethylester und 6,9 g $K_2CO_3$ in 100 ml Aceton wird 24 h unter Rückfluß erhitzt. Nach dem Abkühlen versetzt man mit 100 ml $CH_2Cl_2$ und extrahiert 2 mal mit 0,1 N wäßriger NaOH-Lösung, trocknet die organische Phase mit $MgSO_4$ und zieht das Lösemittel ab; Ausbeute 10,6 g (73 %).

**4-(9-Decenyloxy)-benzoesäure (C)**

10,0 g (34,5 mmol) von B werden in Ethanol gelöst und 3,9 g (70 mmol) KOH zugegeben. Das Reaktionsgemisch wird 3 h am Rückfluß erhitzt. Nach dem Abkühlen wird mit konzentrierter wäßriger HCl-Lösung angesäuert und der ausgefallene Niederschlag abfiltriert: Ausbeute 9,0 g (95 %).

**4-4-(9-Decenyloxy)-benzoesäure-4'-hydroxybiphenylester (D)**

Eine Lösung von 7,4 g (40 mmol) 4,4'-Dihydroxybiphenyl in 200 ml $CH_2Cl_2$ (abs.) und 8,3 ml Trietehylamin (60 mmol) wird bei 20 °C tropfenweise mit 7,5 ml (56 mmol) Trimethylchlorsilan versetzt und 1 h nachgerührt. Anschließend fügt man 8,3 g (30 mmol) von C, 6,2 g (30 mmol) DCCI und 600 mg (5 mmol) DMAP zu und rührt während 24 h. Der entstehende Niederschlag wird abfiltriert, das Lösemittel abgezogen und der Rückstand aus schwach HCl-saurem Ethanol umkristallisiert; Ausbeute 5,8 g (44 %).

**2S,3S-(+)-4-4-(9-Decenyloxy)-benzoyloxy-4'-(2-chlor-3-methyl-pentansäure)-biphenylester (E)**

Zu einer Lösung von 2,2 g (5 mmol) an D, 750 mg (5 mmol) der 2S,3S-2-Chlor-3-methyl-pentansäure und 100 mg (0,75 mmol) Dimethylaminopyridin (DMAP) gibt man bei 0 °C 1,3 g (5 mmol) Dicyclohexylcarbodiimid (DCCI) und läßt 24 h bei Raumtemperatur nachrühren. Es wird vom Niederschlag abfiltriert, das Lösemittel abgezogen und der Rückstand durch Säulenchromatographie gereinigt; Ausbeute 1,35 g (47 %), $[\alpha]_D^{25}$ : +2,7 (c = 0,015/$CHCl_3$).

Die Anlagerung von E an die Polyhydrogenmethylsiloxane unterschiedlicher Molekularmasse erfolgt nach der allgemeinen Arbeitsvorschrift.

## Patentansprüche

**1.** Ferroelektrische flüssigkristalline Polymere der Formel (I)

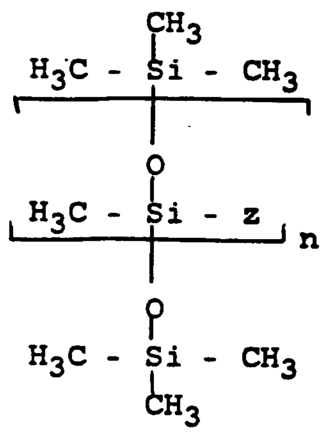

(I)

wobei

z = $CH_3$ oder eine Gruppe der Formel (II) ist,

$$(CH_2)_a(\text{-}B)_b\text{-}M^1(\text{-}A^1)_c(\text{-}M^2)_d(\text{-}A^2)_e(\text{-}M^3)_f(\text{-}A^3)_g\text{-}R^1 \quad \text{(II)}$$

mit der Maßgabe, daß mindestens zwei Substituenten z im Polymeren eine Gruppe der Formel (II) sind,

n = 5 bis 500,

B = eine Gruppe der Formel

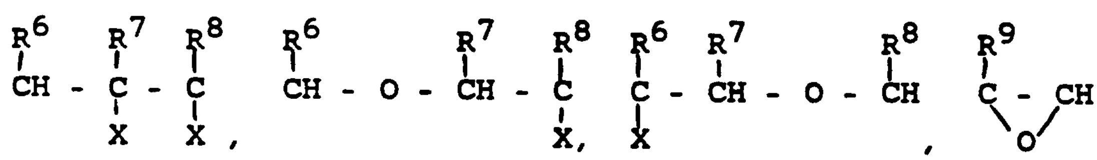

mit $R^6$, $R^7$, $R^8$ gleich oder verschieden H, $CH_3$, $OCH_3$, F, Cl, Br, wobei mindestens eine Gruppe $R^6$, $R^7$, $R^8$ gleich H sein muß und X = H, F, Cl, Br und $R^9$ = H, $C_1$-$C_{10}$-Alkyl,

$R^1$ = geradkettiges oder verzweigtes (ohne asymmetrisches C-Atom) Alkyl mit 1 bis 16 oder Alkenyl mit 2 bis 16 C-Atomen, wobei auch eine oder zwei nichtbenachbarte -$CH_2$-Gruppen durch -O-, -S-, -CO-, -CO-O-, -O-CO- oder -O-CO-O- ersetzt sein können und wobei auch H durch F ersetzt sein kann, oder einer der nachfolgenden Reste

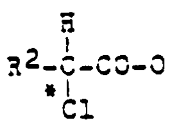 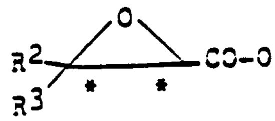 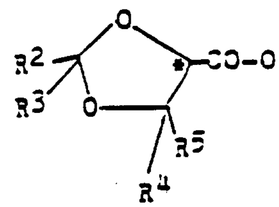

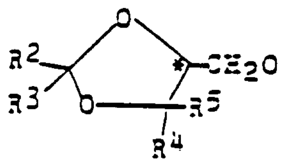 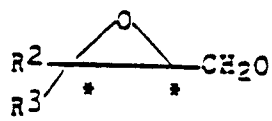 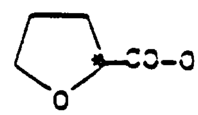

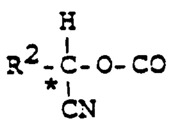 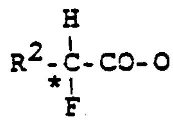 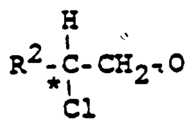

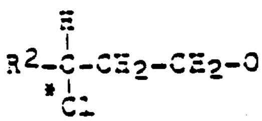 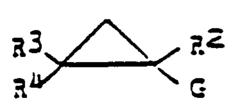

| | |
|---|---|
| $R^2$, $R^3$, $R^4$, $R^5$ = | H oder geradkettiges oder verzweigtes Alkyl mit 1 bis 16 oder Alkenyl mit 2 bis 16 C-Atomen, bei dem auch eine -$CH_2$-Gruppe durch -O-, -CO-O- oder -O-CO- ersetzt sein kann, oder $R^2$ und $R^3$ zusammen cyclisches Alkyl mit 3 bis 8 C-Atomen |
| a = | 2 bis 20, vorzugsweise 6 bis 12 |
| b, c, d, e, f, g = | 0 oder 1 mit der Maßgabe, daß e+f+g = 2 oder 3 ist |
| $A^1$, $A^2$, $A^3$ = | gleich oder verschieden 1,4-Phenylen, bei dem 1 oder 2 H durch F, Cl und/oder CN ersetzt sein können, trans-1,4-Cyclohexylen, bei dem 1 oder 2 H durch F, Cl, CN und/oder $CH_3$ ersetzt sein können, Pyrazin-2,5-diyl, Pyridazin-3,6-diyl, Pyridin-2,5-diyl, Pyrimidin-2,5-diyl, (1,3,4)-Thiadiazol-2,5-diyl, 1,3-Dioxan-2,5-diyl, 1,3-Dithian-2,5-diyl. |
| $M^2$, $M^3$ = | gleich oder verschieden CO-O, O-CO, CO-S, S-CO, $CH_2$-O, O-$CH_2$, |
| $M^1$ = | O, 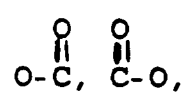 $CH_2$-$CH_2$ |
| G = | geradkettiges oder verzweigtes Alkylen mit 1 bis 16 C-Atomen oder Alkenylen mit 2 bis 16 C-Atomen, bei dem auch eine oder zwei nichtbenachbarte -$CH_2$-Gruppen durch -O-, -S-, -O-CO-, -CO-O-, S-CO- oder -CO-S- ersetzt sein können, bedeuten. |

**2.** Ferroelektrische flüssigkristalline Polymere der Formel (I) aus Anspruch 1, dadurch gekennzeichnet, daß die Gruppierung $(-A^1)_c(M^2)_d(-A^2)_e(-M^3)_f(-A^3)_g$- bedeutet:

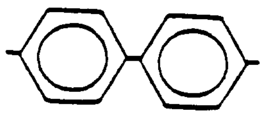 , 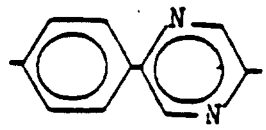 , 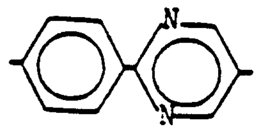 ,

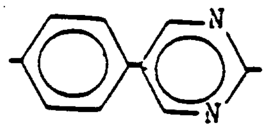 , 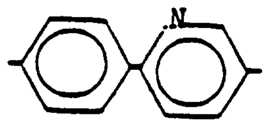 , 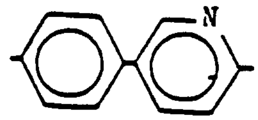 ,

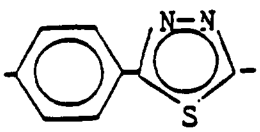 , 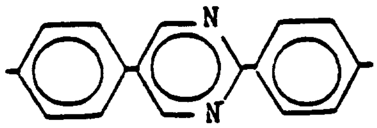 ,

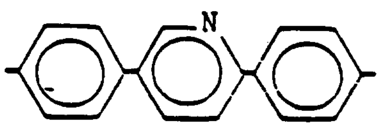 , 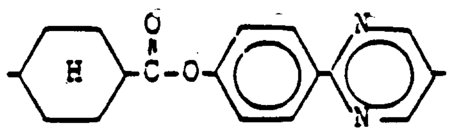 ,

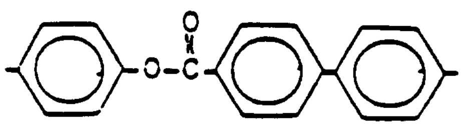 , 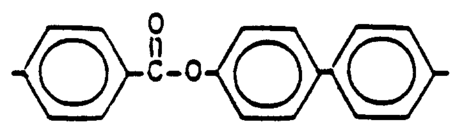 ,

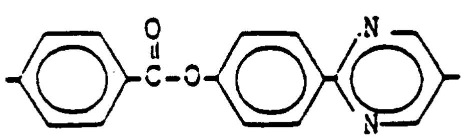 , 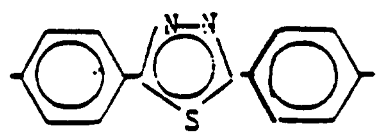 ,

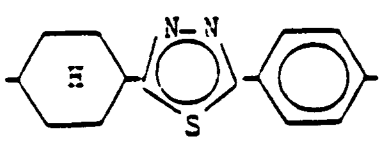 , 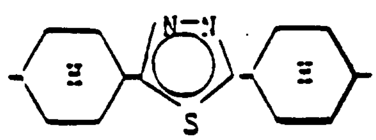 ,

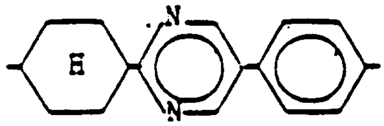 , 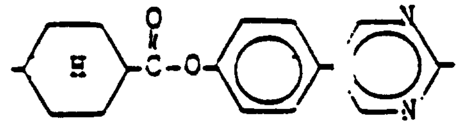

**3.** Ferroelektrische, flüssigkristalline Polymere der Formel (I) nach Anspruch 1 wobei

B = die in Anspruch 1 genannte Bedeutung hat und

Y = H, $CH_3$,

$R^1$ = geradkettiges oder verzweigtes (ohne asymmetrisches C-Atom) Alkyl oder Alkenyl mit 2 bis 16 C-Atomen, wobei auch eine oder zwei nichtbenachbarte $-CH_2$-Gruppen durch -O-, -S-, -CO-, -CO-O-, -O-CO- oder -O-CO-O- ersetzt sein können und wobei auch H durch F ersetzt sein kann, oder den Rest

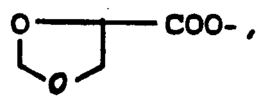

a = 6 bis 12, bedeuten und die Gruppierung $(-A^1)_c(-M^2)_d-(-A^2)_e(-M^3)_f(-A^3)_g-$ folgende Strukturen umfaßt:

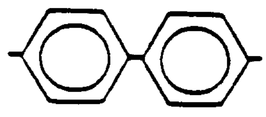
,
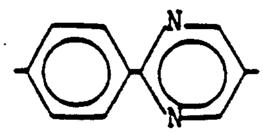
,
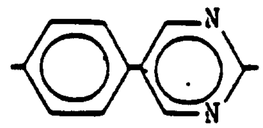

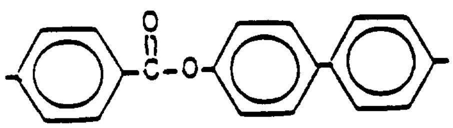
,
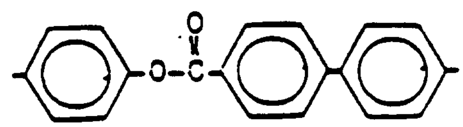

4. Ferroelektrische, flüssigkristalline Polymere der Formel (I) aus Anspruch 1, dadurch gekennzeichnet, daß z eine Gruppe der Formel (II) ist.

5. Verfahren zur Herstellung der Polymeren nach einem der Ansprüche 1 bis 4, dadurch gekennzeichnet, daß man eine Verbindung der allgemeinen Formel (III)

$CH_2 = CH(-CH_2)_{a-2}(-B)_b-M^1(-A^1)_c(-M^2)_d(-A^2)_e(-M^3)_f(-A^3)_g-R^1$ (III)

an ein Polyhydrogenmethylsiloxan der Formel (IV) polyaddiert.

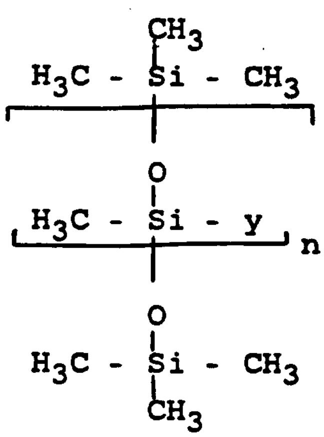

(IV)

wobei
n = 5 bis 500 und
y = H oder $CH_3$ mit der Maßgabe, daß mindestens zwei Gruppen y gleich H sind.

6. Verwendung von ferroelektrischen, flüssigkristallinen Polymeren nach einem der Ansprüche 1 bis 4 in elektrooptischen Bauteilen.

**7.** Elektrooptische Bauteile enthaltend ein Polymer nach einem der Ansprüche 1 bis 4.

**Claims**

**1.** A ferroelectric, liquid-crystalline polymer of the formula (I)

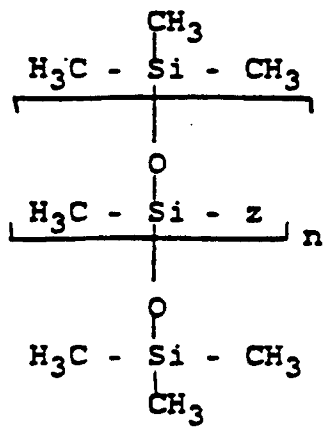

(I)

where

z is $CH_3$ or a group of the formula (II),

$(CH_2)_a(-B)_b-M^1(-A^1)_c(-M^2)_d(-A^2)_e(-M^3)_f(-A^3)_g-R^1$ (II)

with the proviso that at least two substituents z in the polymer are a group of the formula (II),

n is 5 to 500,

B is a group of the formula

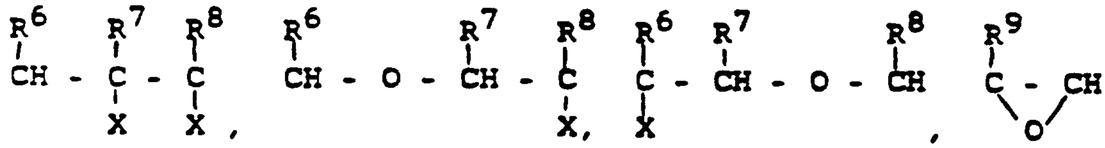

where $R^6$, $R^7$ and $R^8$ are identical or different and are H, $CH_3$, $OCH_3$, F, Cl or Br, where at least one group $R^6$, $R^7$ or $R^8$ must be H, and X is H, F, Cl or Br and $R^9$ is H or $C_1$-$C_{10}$-alkyl,

$R^1$ is straight-chain or branched (without an asymmetric carbon atom) alkyl having 1 to 16 carbon atoms or alkenyl having 2 to 16 carbon atoms, it also being possible for one or two non-adjacent $-CH_2$-groups to be replaced by -O-, -S-, -CO-, -CO-O-, -O-CO- or -O-CO-O-, and it also being possible for H to be replaced by F, or is one of the following radicals

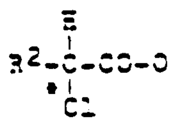 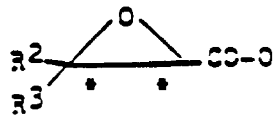 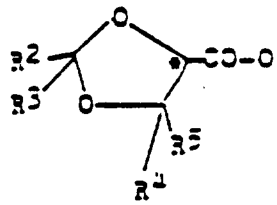

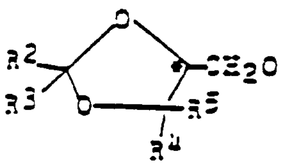 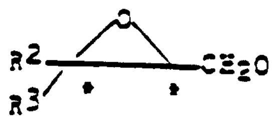 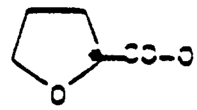

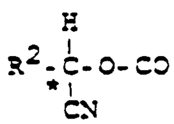 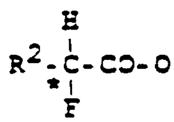 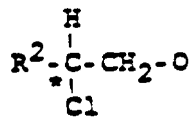

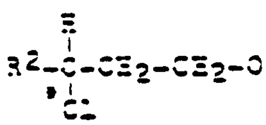 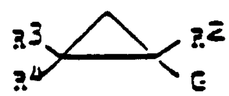

| | |
|---|---|
| $R^2$, $R^3$, $R^4$ and $R^5$ | are H or straight-chain or branched alkyl having 1 to 16 carbon atoms or alkenyl having 2 to 16 carbon atoms, in which one $-CH_2-$ group may also be replaced by -O-, -CO-O- or -O-CO-, or $R^2$ and $R^3$ together are cyclic alkyl having 3 to 8 carbon atoms, |
| a | is 2 to 20, preferably 6 to 12, |
| b, c, d, e, f and g | are 0 or 1, with the proviso that e + f + g is 2 or 3, |
| $A^1$, $A^2$ and $A^3$ | are identical or different 1,4-phenylene, in which 1 or 2 H may be replaced by F, Cl and/or CN, trans-1,4-cyclohexylene, in which 1 or 2 H may be replaced by F, Cl, CN and/or $CH_3$, pyrazine-2,5-diyl, pyridazine-3,6-diyl, pyridine-2,5-diyl, pyrimidine-2,5-diyl, (1,3,4)-thiadiazole-2,5-diyl, 1,3-dioxane-2,5-diyl or 1,3-dithiane-2,5-diyl, |
| $M^2$ and $M^3$ | are identical or different CO-O, O-CO, CO-S, S-CO, $CH_2$-O or O-$CH_2$, |
| $M^1$ | is O, 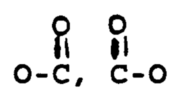 or $CH_2$-$CH_2$, and |
| G | is straight-chain or branched alkylene having 1 to 16 carbon atoms or alkenylene having 2 to 16 carbon atoms, in which one or two non-adjacent $-CH_2-$ groups may also be replaced by -O-, -S-, -O-CO-, -CO-O-, S-CO- or -CO-S-. |

**2.** A ferroelectric, liquid-crystalline polymer of the formula (I) from claim 1, wherein the group $(-A^1)_c(M^2)_d(-A^2)_e(-M^3)_f(-A^3)_g-$ is:

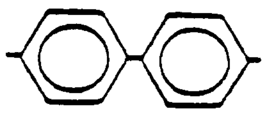 , 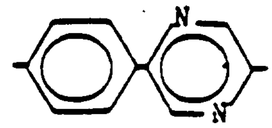 , 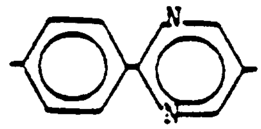 ,

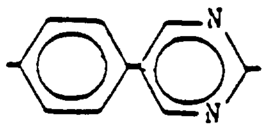 , 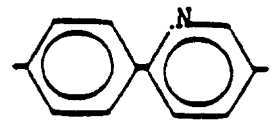 , 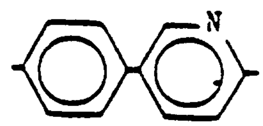 ,

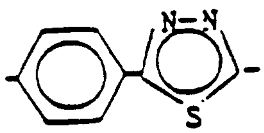 , 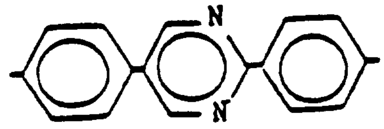 ,

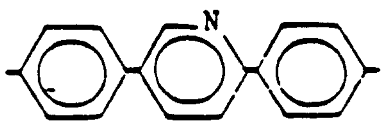 , 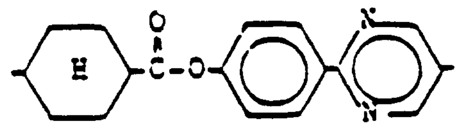 ,

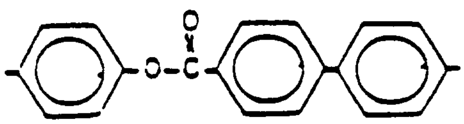 , 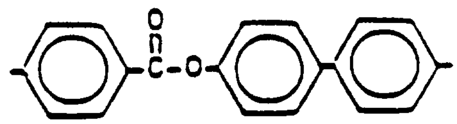 ,

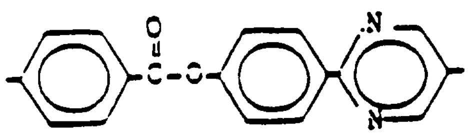 , 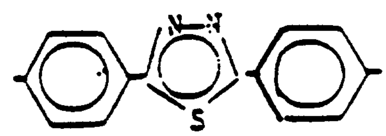

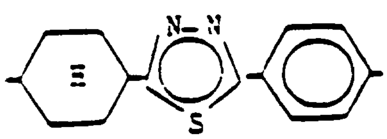 , 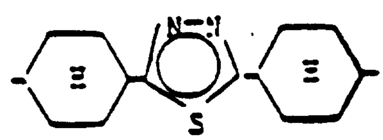 ,

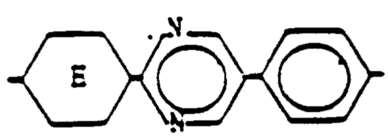 or 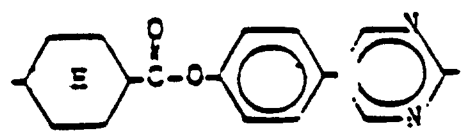

**3.** A ferroelectric, liquid-crystalline polymer of the formula (I) as claimed in claim 1, where

B is as defined in claim 1, and

Y is H or $CH_3$,

$R^1$ is straight-chain or branched (without an asymmetric carbon atom) alkyl or alkenyl having 2 to 16 carbon atoms, it also being possible for one or two non-adjacent $-CH_2-$ groups to be

replaced by -O-, -S-, -CO-, -CO-O-, -O-CO- or -O-CO-O-, and it also being possible for H to be replaced by F, or the radical

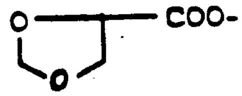 ,

a is 6 to 12, and the group $(-A^1)_c(M^2)_d(-A^2)_e(-M^3)_f(-A^3)_g-$ comprises the following structures:

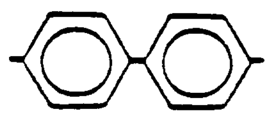 , 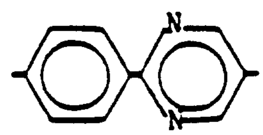 , 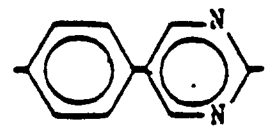

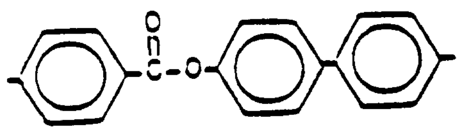 or 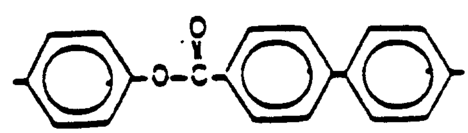

**4.** A ferroelectric, liquid-crystalline polymer of the formula (I) from claim 1, wherein z is a group of the formula (II).

**5.** A process for the preparation of a polymer as claimed in any one of claims 1 to 4, which comprises the polyaddition of a compound of the formula (III)

$CH_2 = CH(-CH_2)_{a-2}(-B)_b-M^1(-A^1)_c(-M^2)_d(-A^2)_e(-M^3)_f(-A^3)_g-R^1$ (III)

with a polyhydrogenmethylsiloxane of the formula (IV)

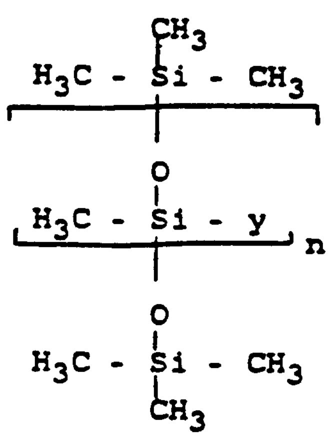

(IV)

where
- n is 5 to 500, and
- Y is H or $CH_3$, with the proviso that at least two groups y are H.

**6.** The use of a ferroelectric, liquid-crystalline polymer as claimed in any one of claims 1 to 4 in electrooptical components.

**7.** An electrooptical component containing a polymer as claimed in any one of claims 1 to 4.

## Revendications

**1.** Polymères mésomorphes ferroélectriques de formule (I)

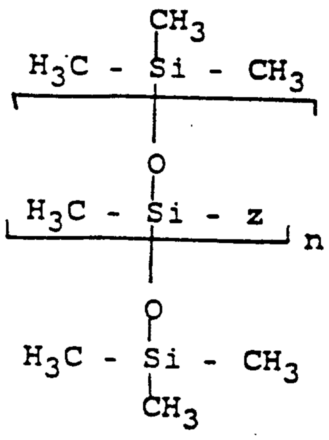

(I)

dans laquelle
z est $CH_3$ ou un groupe de formule (II)

$(CH_2)_a(-B)_b-M^1(-A^1)_c(-M^2)_d(-A^2)_e(-M^3)_f(-A^3)_g-R^1$ (II)

du moment qu'au moins deux substituants z du polymère représentent un groupe de formule (II),
n vaut de 5 à 500,
B est un groupe de formule

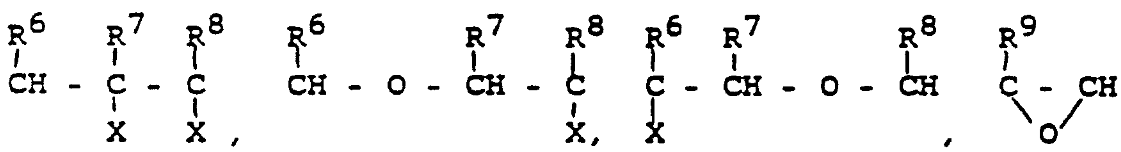

où $R^6$, $R^7$ et $R^8$ sont identiques ou différents et représentent chacun H, $CH_3$, $OCH_3$, F, Cl, Br, au moins l'un des groupes $R^6$, $R^7$ et $R^8$ devant être H, et X = H, F, Cl, Br, et $R^9$ est H ou un radical alkyle en $C_1$-$C_{10}$,

$R^1$ est un radical alkyle ayant de 1 à 16 atomes de carbone ou alcényle ayant de 2 à 16 atomes de carbone, à chaîne droite ou ramifiée, sans atome de carbone asymétrique, où un ou deux groupes $-CH_2-$ non voisins peuvent de même être remplacés par -O-, -S-, -CO-, -CO-O-, -O-CO- ou -O-CO-O-, H pouvant aussi être remplacé par F, ou encore est l'un des radicaux suivants :

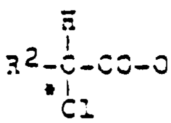 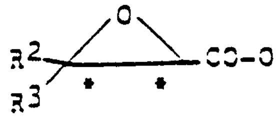 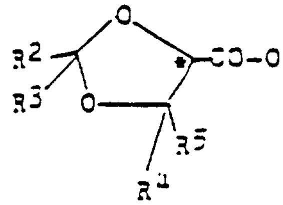

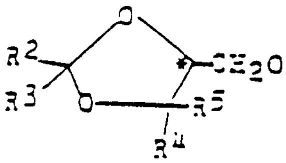 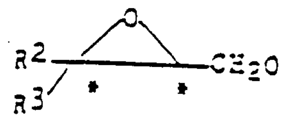 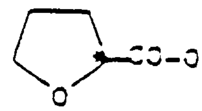

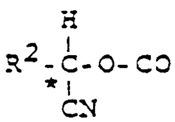 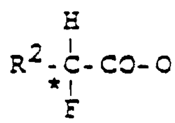 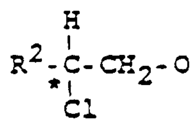

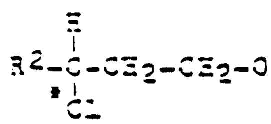 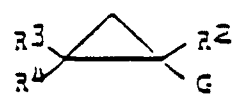

$R^2$, $R^3$, $R^4$ et $R^5$ représentent chacun H ou un radical alkyle ayant de 1 à 16 atomes de carbone ou alcényle ayant de 2 à 16 atomes de carbone, à chaîne droite ou ramifiée, où un groupe $-CH_2-$ peut aussi être remplacé par -O-, -CO-O- ou -O-CO-, ou encore $R^2$ et $R^3$ forment ensemble un radical alkyle cyclique ayant de 3 à 8 atomes de carbone,

a vaut 2 à 20, de préférence 6 à 12,

b, c, d, e, f, g = 0 ou 1, du moment que e + f + g = 2 ou 3,

$A^1$, $A^2$ et $A^3$ sont identiques ou différents et représentent chacun un radical 1,4-phénylène dans lequel 1 ou 2 hydrogènes peuvent être remplacés par F, Cl et/ou CN, trans-1,4-cyclohexylène dans lequel 1 ou 2 hydrogènes peuvent être remplacés par F, Cl, CN et/ou $CH_3$, pyrazine-2,5-diyle, pyridazine-3,6-diyle, pyridine-2,5-diyle, pyrimidine-2,5-diyle, (1,3,4)-thiadiazole-2,5-diyle, 1,3-dioxanne-2,5-diyle, 1,3-dithianne-2,5-diyle,

$M^2$ et $M^3$ sont identiques ou différents et représentent chacun CO-O, O-CO, CO-S, S-CO, $CH_2$-O ou O-$CH_2$,

$M^1$ est O,

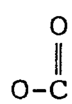, 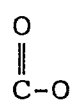,

$CH_2$-$CH_2$

G est un radical alkylène ayant de 1 à 16 atomes de carbone ou alcénylène ayant de 2 à 16 atomes de carbone, à chaîne droite ou ramifiée, où un ou deux groupes $-CH_2-$ non voisins peuvent aussi être remplacés par -O-, -S-, -O-CO-, -CO-O-, S-CO- ou -CO-S-.

**2.** Polymères mésomorphes ferroélectriques de formule (I) selon la revendication 1, caractérisés en ce que le groupement $(-A^1)_c(M^2)_d(-A^2)_e(-M^3)_f(-A^3)_g$- est l'un des groupements suivants :

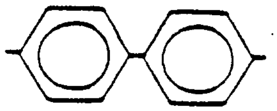 , 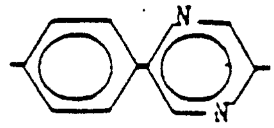 , 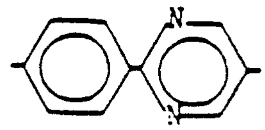 ,

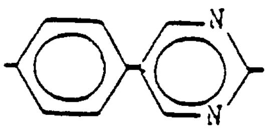 , 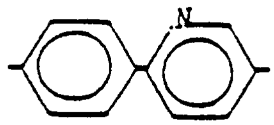 , 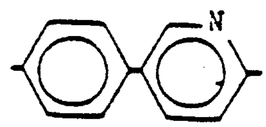 ,

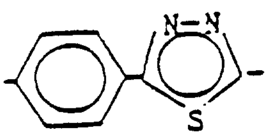 , 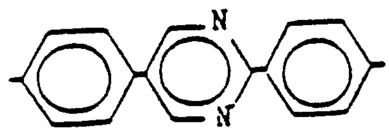 ,

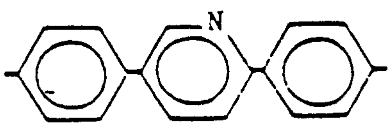 , 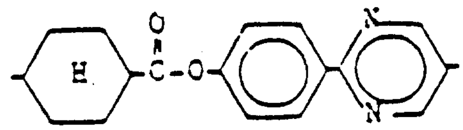 ,

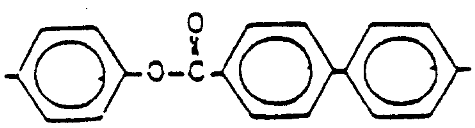 , 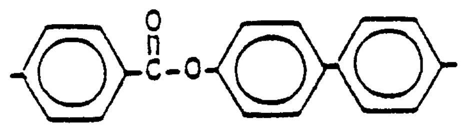 ,

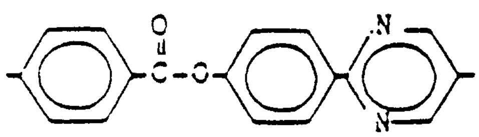 , 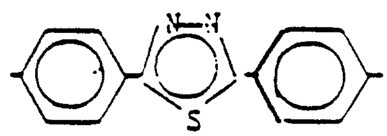 ,

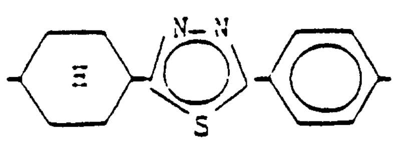 , 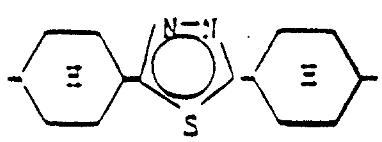 ,

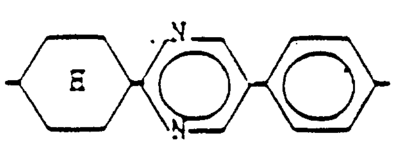 , 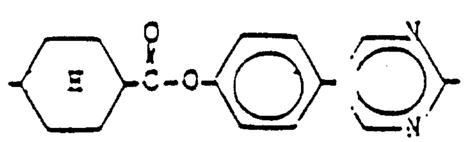 .

**3.** Polymères mésomorphes ferroélectriques de formule (I) selon la revendication 1, dans lesquels :

B a les significations données dans la revendication 1 et

Y est H ou $CH_3$,

$R^1$ est un radical alkyle ou alcényle à chaîne droite ou ramifiée sans atome de carbone asymétrique et ayant de 2 à 16 atomes de carbone, un ou deux groupes $-CH_2-$ non voisins pouvant

aussi être remplacés par -O-, -S-, -CO-, -CO-O-, -O-CO- ou -O-CO-O-, où H peut aussi être remplacé par F, ou encore le radical

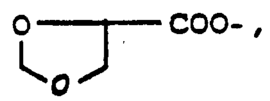

a vaut de 6 à 12,
et le groupement $(-A^1)_c(-M^2)_d-(-A^2)_e(-M^3)_f(-A^3)_g-$ représente les structures suivantes :

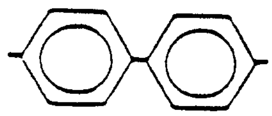 , 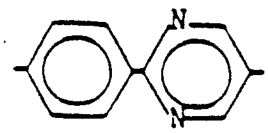 , 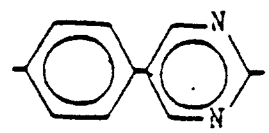 .

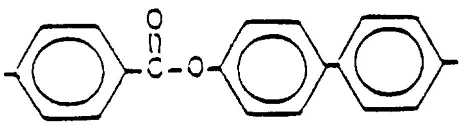 , 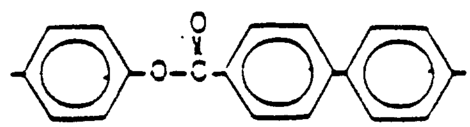

4. Polymères mésomorphes ferroélectriques de formule (I) selon la revendication 1, caractérisés en ce que z est un groupe de formule (II).

5. Procédé pour préparer les polymères selon l'une des revendications 1 à 4, caractérisé en ce qu'on fixe par polyaddition d'un composé de formule générale (III)

$$CH_2 = CH(-CH_2)_{a-2}(-B)_b-M^1(-A^1)_c(-M^2)_d(-A^2)_e(-M^3)_f(-A^3)_g-R^1 \qquad (III)$$

sur un polyhydrogénométhylsiloxane de formule (IV)

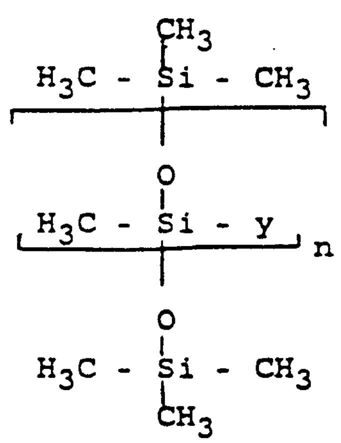

(IV)

où n vaut de 5 à 500, et
y est H ou $CH_3$, du moment qu'au moins deux groupes y sont des hydrogènes.

6. Utilisation de polymères mésomorphes ferroélectriques selon l'une des revendications 1 à 4 dans des composants électro-optiques.

7. Composants électro-optiques contenant un polymère selon l'une des revendications 1 à 4.